# EUROPÄISCHE PATENTANMELDUNG

(11) **EP 0 875 707 A2**
(43) Veröffentlichungstag der Anmeldung: **04.11.1998**
(21) Anmeldenummer: 98106110.4
(22) Anmeldetag: 03.04.1998
(51) Int. Cl.: F16L 27/04

(54) **Verbindungselement für zwei starre Rohre, insbesondere in Kraftfahrzeug-Abgasanlagen**

(30) Priorität: 03.05.1997 DE 19718784
(71) Anmelder: Volkswagen Aktiengesellschaft, 38436 Wolfsburg (DE)
(72) Erfinder: Hoheisel, Gerhardt, 38448 Wolfsburg (DE)

(57) **Zusammenfassung**

Die Erfindung betrifft ein Verbindungselement für zwei starre Rohre, insbesondere in Kraftfahrzeug-Abgasanlagen, mit konzentrischen Kugelausschnittsbereichen zum Ausgleich von Winkeln zwischen den Achsen der Rohre.

Um eine schnelle und kostengünstige Montage der Abgasanlagen-Verbindung zu ermöglichen, die vorzugsweise wieder lösbar sein soll, und in der Lage ist, eine starre Verbindung der Abgasanlagenelemente zu gewährleisten und dennoch Winkelfehler zwischen dem Abgasanlagenelementen zu kompensieren, enthält das Verbindungselement zwei Hülsen (20, 21) mit jeweils zwei axial aufeinanderfolgenden Bereichen, von denen einander zugekehrte Bereiche (26, 27) beider Hülsen (20, 21) die konzentrischen Kugelausschnittsbereiche bilden, während die anderen, einander abgekehrten Bereiche (22, 23) der Hülsen zur Aufnahme einander zugekehrter Endbereiche von Abgasanlagenelementen (4, 5) im wesentlichen hohlzylindrisch ausgebildet sind und ihnen Verspannmittel (24, 25) zur Verengung oder Verspannung in radialer Richtung zugeordnet sind.

Die Hülsen (20, 21) können dabei insbesondere jeweils aus zwei Lagen mit zueinander in Umfangsrichtung versetzten Längsschlitzen (40) ausgebildet sein.

## Beschreibung

Die Erfindung bezieht sich auf ein Verbindungselement gemäß dem Oberbegriff von Anspruch 1 sowie ein Verfahren zum Herstellen einer Abgasanlagen-Verbindung gemäß dem Oberbegriff von Anspruch 9.

Bei dem Einbau von Abgasanlagen in ein Kraftfahrzeug müssen mehrere in Längsrichtung des Fahrzeugs hintereinander gesteckte, im wesentlichen rohrförmige Abgasanlagenelemente miteinander verbunden werden. Dabei muß neben der Dichtigkeit dieser Verbindungen auch gewährleistet werden, daß die einzelnen Abgasanlagenelemente starr miteinander verbunden sind, um Eigenschwingungen der einzelnen Abgasanlagenelemente in ihren z. B. durch Gummischlaufen gebildeten Aufhängungen am Fahrzeugaufbau zu verhindern, die zu Beschädigungen der Abgasanlagenelemente selbst und des Fahrzeugaufbaus führen kann. Während die gesamte Abgasanlage selbst am Abgaskrümmer der Brennkraftmaschine mittels eines im allgemeinen flexiblen Entkopplungselements angebracht ist, ist die in der Regel aus einem vorderen Abgasanlagenelement mit Abgaskonverter (Katalysator) und einem hinteren Abgasanlagenelement, das im allgemeinen einen Vorschalldämpfer und einen Nachschalldämpfer aufweist, gebildete Abgasanlage eine als Ganzes starre Einheit.

Bei der Montage der Abgasanlage unter das Kraftfahrzeug können jedoch zwischen diesen Abgasanlagenelementen aufgrund der großen Längserstreckung der Abgasanlage vom Fahrzeugmotor bis zum am hinteren Ende des Fahrzeugs endenden Auspuffrohr zwischen den am Aufbau aufgehängten Abgasanlagenelementen aufgrund der Fertigungs- und Bautoleranzen der zum Teil mehrere Meter langen Elemente Toleranzen sowohl in axialer Richtung als auch in der Winkeleinstellung zueinander auftreten.

Der Einsatz von flexiblen Verbindungselementen nicht nur zwischen dem Abgaskrümmer und der Abgasanlage, sondern auch zwischen den einzelnen Rohrelementen der Abgasanlage selbst ist dabei auch vorgeschlagen worden. Die DE 22 31 110 A1 beschreibt eine Gelenkverbindung für Auspuffleitungen, bei dem zwischen die starren Rohre ein schwenkbar eingefügtes Verbindungsrohr mit an beiden Enden angeordneten balligen Gelenkflächen eingesetzt wird. Das Verbindungsrohr ist dabei über einen flexiblen Abschnitt, z. B. ein Wellrohr mit den Abgasrohren verbunden und kann aufgrund der kugelgelenkartigen Ausbildung der balligen Gelenkflächen Winkelfehler zwischen den Abgasrohren kompensieren. Nachteilhaft an dieser Verbindung ist jedoch, daß die einzelnen Abgasrohre wie oben beschrieben aufgrund der Erschütterungen während der Fahrt und aufgrund der mechanischen Anregung durch den Abgasstrom Schwingungen ausführen können, die Schäden hervorrufen können.

Der Erfindung liegt die Aufgabe zugrunde, ein Verbindungselement und ein Verfahren zum Herstellen einer Abgasanlagen-Verbindung zu schaffen, das eine schnelle und kostengünstige Montage der Abgasanlagen-Verbindung ermöglicht, die vorzugsweise wieder lösbar sein soll und in der Lage ist, eine starre Verbindung der Abgasanlagenelemente zu gewährleisten und dennoch Winkelfehler zwischen den Abgasanlagenelementen zu kompensieren.

Diese Aufgabe wird durch ein Verbindungselement nach Anspruch 1 und ein Verfahren nach Anspruch 9 gelöst. Die Unteransprüche beschreiben bevorzugte Weiterbildungen.

Erfindungsgemäß wird somit ein Verbindungselement bereit gestellt das zwei Hülsen aufweist, in die jeweils die Rohrenden der Abgaselemente eingesteckt werden können. Die beiden Hülsen des Verbindungselements sind dabei kugelig bewegbar zueinander, so daß innerhalb eines gewissen Winkelbereichs beliebige Winkel zwischen den Abgasanlagenelementen ausgeglichen werden können. Da jede der Hülsen aus zwei längsgeschlitzten Hülsen besteht, können diese durch Verspannmittel radial eingeengt werden, so daß in dem kugelgelenkartigen Bereich eine Fixierung durch Verspannung der beiden Hülsen gegeneinander eine starre Verbindung erreicht wird.

Als Verspannmittel können dabei insbesondere Klemmschellen eingesetzt werden.

Indem die Hülsen Längsschlitze aufweisen, die in Umfangsrichtung zueinander versetzt sind, kann ein Dichtlabyrinth in jeder der Hälften erreicht werden, das ein Austreten von Abgasen weitgehend verhindert. Die verbleibenden Undichtigkeiten sind dabei unerheblich und beeinträchtigen nicht die Funktionsfähigkeit. Sie werden dabei im allgemeinen sogar durch im Abgasstrom enthaltenden Ruß und andere Partikel noch verstopft, so daß nach einiger Zeit sogar eine vollständige Dichtigkeit erreicht werden kann.

Durch eine Drehsicherung der Hülsen gegenüber den Abgasanlagenelementen wird endgültig eine starre, winkelfeste und rotationsfeste Verbindung von zwei Abgasanlagenelementen miteinander erreicht.

Die Erfindung wird im folgenden anhand der beiliegenden Zeichnung an einer Ausführungsform näher erläutert. Es zeigen:

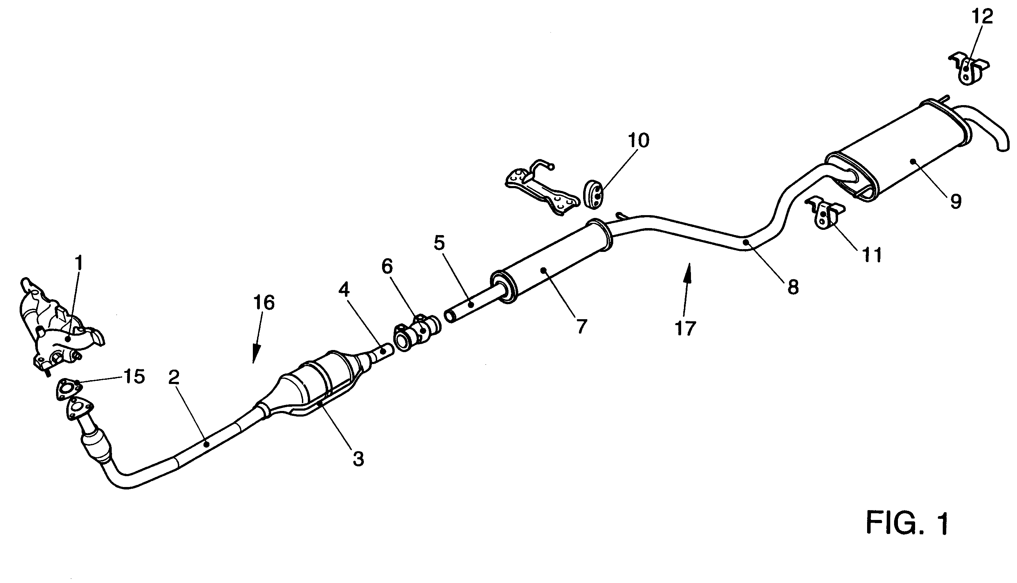

- Figur 1: eine Anordnung einer Kraftfahrzeugabgasanlage mit einer Ausführungsform eines erfindungsgemäßen Verbindungselements;
- Figur 2: das Verbindungselement teilweise im Längsschnitt;
- Figur 3: ein Schnitt entlang der Linie IV-IV in Figur 2;
- Figur 4: eine Einzelheit A aus Figur 3.

Eine Abgasanlage ist über eine Dichtung 15 an einem Abgaskrümmer 1 befestigt. Die Abgasanlage weist im wesentlichen zwei Bauteile auf, einen in Fahrtrichtung vorderen Bauteil, der ein erstes Abgasrohr 2, einen Abgaskonverter 3 und ein erstes Ansatzstück 4 aufweist. Ein zweites Bauteil 17 weist ein zweites Ansatzstück 5, einen Vorschalldämpfer 7, ein Verbindungsrohr 8 und einen Nachschalldämpfer 9 auf und ist über z. B. als Gummischlaufen ausgebildete Aufhängungen 10, 11 und 12 am Fahrzeugboden befestigt`

Erfindungsgemäß ist eine Klemmhülse 6 als Verbindungseinrichtung 6 vorgesehen, um die Bauteile 16 und 17 den ersten und zweiten Ansatzstücken 4 und 5 miteinander zu verbinden.

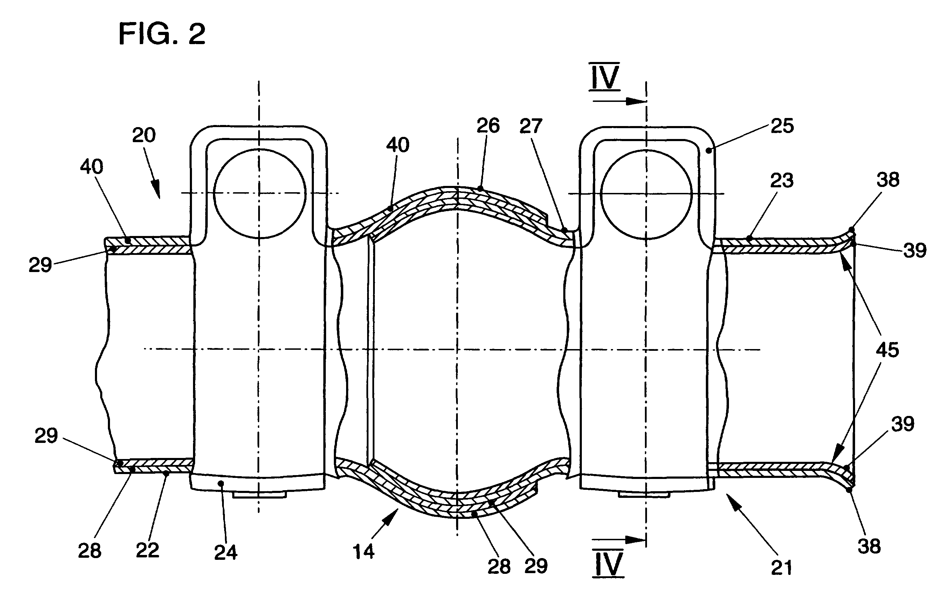

Die Klemmhülse 6 besteht dabei nach Figur 2 aus zwei Hülsen, einer ersten Hülse 20 und einer zweiten Hülse 21, die in einem Kugelgelenkbereich 14 miteinander verbunden sind.

Jede der beiden Hülsen weist dabei einen im wesentlichen rohrförmigen abgekehrten Bereich 22 bzw. 23 und Kugelbereiche 26 bzw. 27 auf, die im Kugelgelenkbereich 14 der Hülse konzentrisch übereinander liegen und somit zueinander kugelig bewegbar sind, so daß Winkelverstellungen der beiden Hülsen 20 und 21 innerhalb eines gewissen Winkelbereichs in jeder Raumrichtung einstellbar sind.

Jede der beiden Hülsen 20 und 21 weist zwei Lagen 28 und 29 bzw. 38 und 39 auf, die miteinander jeweils nicht verbunden sind. Jede der Lagen weist einen sich axial erstreckenden Längsschlitz auf, wobei in Figur 2 der Längsschnitt 40 der äußeren Lage 28 der ersten Hülse 20 gezeigt ist. Die Lagen sind aus einem üblichen Stahlmaterial oder Stahlblech gefertigt, wie es üblicherweise im Abgasrohrbereich eingesetzt wird.

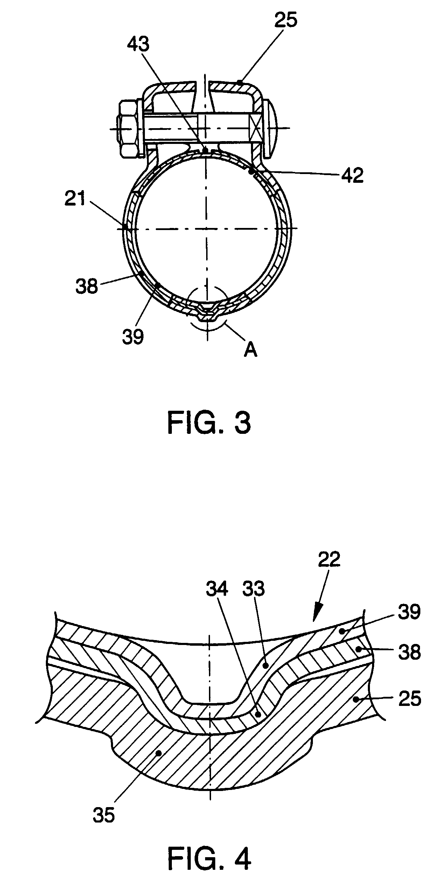

Die beiden Lagen jeder Hülse werden in den abgekehrten Bereichen 22 und 23 jeweils von einer Klemmschelle 24 bzw. 25 umgeben, die eine radiale Einengung bzw. Verspannung der Lagen 28, 29, 38, 39 bewirken kann bei Festziehen der Klemmschellen 24 bzw. 25 werden somit die jeweiligen Längsschlitze der Lagen geschlossen und der Radius der Lagen verringert, wobei es zwischen den einzelnen Lagen 28 und 29 bzw. 38 und 39 zu keinen nennenswerten Verspannungen kommt, da die Lagen untereinander frei verschiebbar sind. Da die Längsschlitze zweier übereinanderliegender Lagen 28 und 29 bzw. 38 und 39 in Umfangsrichtung zueinander versetzt sind, kann kein nennenswerter Abgasstrom aus dem Inneren der Hülse nach außen treten, da zwischen den Lagen ein Dichtlabyrinth erzeugt ist, wie es z. B. in der Schnittansicht der Figur 3 zwischen den Längsschlitzen 42 und 43 der zweiten Hülse 21 gezeigt ist. Dabei wird bereits die Verspannung der Lagen 38 und 39 gegeneinander eine weitgehende Dichtung zwischen den Längsschlitzen erreicht. Während des Betriebs des Fahrzeugs setzen sich zudem Rußteilchen und andere Partikel des Abgasstroms in den schmalen Pfad zwischen den Lagen, so daß bereits nach einiger Zeit eine absolute Dichtung der Hülse 6 erreicht wird.

Um ein Verdrehen der beiden Lagen jeder Hülse, z. B. der Lage 38 und 39 der zweiten Hülse 21 zu verhindern, können diese durch einen in Figur 3 mit A bezeichneten und in Figur 4 detailliert dargestellten örtlichen Formschluß gegeneinander und gegenüber der Klemmschelle 25 fixiert werden. Somit sind die Klemmhülse 25 und die beiden Lagen 38 und 39 im Bereich dieses Formschlußes 33, 34, 35 nicht zueinander verschiebbar.

An einem axialen Ende oder vorzugsweise beiden axialen Enden sind Auftulpungen 45 vorgesehen, die ein leichtes Einführen der Ansatzstücke 4 und 5 ermöglichen.

Werden die Schellen 25 und 24 nacheinander angezogen, werden die jeweiligen Lagen 28 und 29 bzw. 38 und 39 sowohl auf die Ansatzstücke 4 und 5 der Abgasrohre gedrückt und somit an ihnen fixiert, zum anderen wird eine Fixierung der beiden Kugelbereiche 26 und 27 erreicht. Somit ergibt sich nach Festziehen der Schellen eine winkelstarre Verbindung zwischen den Abgasanlagenelementen.

Somit kann eine Klemmhülse geschaffen werden, die im nicht verspannten Zustand, bei dem die Schellen 24 und 25 nicht zusammengezogen sind, eine freie Winkeleinstellung der beiden Hülsen 20 und 21 erlauben, im verspannten Zustand, bei dem die Schellen 24 und 25 verspannt sind, jedoch eine Fixierung eines eingestellten Winkels zwischen den Hülsen 20 und 21 erlauben.

Bei der Montage, bei der das vordere Abgasrohr 16 bereits am Fahrzeug montiert ist, wird zunächst das zweite Abgasrohr 17 in die Aufhängungen 10, 11 und 12 eingehängt, wobei die Klemmhülse 6 bereits auf dem Ansatzstück 5 vormontiert ist und dabei vollständig auf dieses Ansatzstück 5 geschoben ist. Dann wird die Klemmhülse 6 soweit in Fahrtrichtung des Fahrzeugs geschoben, daß die erste Hülse 20 über das Ansatzstück 4 geschoben wird. Die Hülsen 20 und 21 werden dabei gegeneinander so winkelmäßig eingestellt, daß keine Verspannung der Abgasrohre 16 und 17 zueinander besteht. Etwa vorhandene Toleranzen in Fahrzeuglängsrichtung können dabei durch entsprechendes Verschieben der Ansatzstücke 4 und 5 in den jeweiligen Hülsen kompensiert werden. Anschließend wird zunächst die Hülse mit dem inneren Kugelbereich, in Figur 2 also die zweite Hülse 21 über die Schelle 25 festgezogen und anschließend die Hülse mit dem äußeren Kugelbereich, in Figur 2 also die erste Hülse 20 festgezogen, so daß die Kugelbereiche gegeneinander verspannt sind.

Grundsätzlich kann die Klemmhülse in jeder Orientierung eingebaut werden, so daß z. B. gemäß Figur 2 die Hülse mit dem äußeren Kugelbereich in Fahrtrichtung vorn liegt und die Hülse mit dem inneren Kugelbereich in Fahrtrichtung hinten. Diese Anordnung kann jedoch aufgrund der in der Figur links gezeigten äußeren Kante der Hülse Wirbel im Abgasstrom hervorrufen und zu einem stärkeren Festsetzen von Partikeln in dem Grenzbereich zwischen den Hülsen führen, so daß auch die andere Orientierung gewählt werden kann, bei der die Hülse mit dem inneren Kugelbereich mit dem Ansatzstück 4 des vorderen Abgasrohrs verbunden und die Hülse mit dem äußeren Kugelbereich mit dem Ansatzstück 5 des hinteren Abgasrohrs verbunden ist.

## Patentansprüche

1. Verbindungselement für zwei starre Rohre, insbesondere in Kraftfahrzeug-Abgasanlagen, mit konzentrischen Kugelausschnittsbereichen zum Ausgleich von Winkeln zwischen den Achsen der Rohre,
dadurch gekennzeichnet, daß
das Verbindungselement zwei Hülsen (20, 21) mit jeweils zwei axial aufeinanderfolgenden Bereichen enthält,
von denen einander zugekehrte Bereiche (26, 27) beider Hülsen (20, 21) die konzentrischen Kugelausschnittsbereiche bilden,
die anderen, einander abgekehrten Bereiche (22, 23) der Hülsen zur Aufnahme einander zugekehrter Endbereiche von Abgasanlagenelementen (4, 5) im wesentlichen hohlzylindrisch ausgebildet sind und
Verspannmittel (24, 25) vorgesehen sind zur Verengung oder Verspannung mindestens einer der Hülsen in radialer Richtung.

2. Verbindungselement nach Anspruch 1, dadurch gekennzeichnet, daß zumindest eine der Hülsen (20, 21) mindestens eine Lage (28, 29; 38, 39) aufweist, die mit einem sich zumindest teilweise in Längsrichtung erstreckt.

3. Verbindungselement nach Anspruch 2, dadurch gekennzeichnet, daß mindestens eine Hülse (20,21) mindestens zwei konzentrische Lagen (28, 29; 38, 39) aufweist, deren Längsschlitze (40, 42, 43) in Umfangsrichtung gegeneinander versetzt sind.

4. Verbindungselement nach Anspruch 2 oder 3, dadurch gekennzeichnet, daß der oder die Längsschlitze mit einem Kulissenprofil zur Erhöhung der Dichtigkeit der Abgasanlagenverbindung ausgebildet sind.

5. Verbindungselement nach einem der Ansprüche 1 bis 4, dadurch gekennzeichnet, daß die Verspannmittel Klemmschellen (24, 25) sind, die die Hülsen (20,21) ringartig umschließen, vorzugsweise im Bereich der abgekehrten Bereiche (22, 23).

6. Verbindungselement nach Anspruch 5, dadurch gekennzeichnet, daß die Klemmschellen von den Hülsen ausgebildete Bauteile sind, die durch örtlichen Formschluß (33, 34, 35) mit den Hülsen drehgesichert sind.

7. Verbindungselement nach einem der Ansprüche 1 bis 6, dadurch gekennzeichnet, daß an einem oder beiden axialen Enden Auftulpungen (45) zur Einführung von Abgasrohren ausgebildet sind.

8. Abgasanlage mit einem Verbindungselement nach einem der Ansprüche 1 bis 7, bei dem zwei starre Rohre (16, 17) der Abgasanlage mit einem Verbindungselement im wesentlichen verspannungsfrei miteinander verbunden sind.

9. Verfahren zum Herstellen einer Abgasanlage, insbesondere unter Verwendung eines Verbindungselements nach einem der Ansprüche 1 bis 7, insbesondere einer Abgasanlage nach Anspruch 8,
dadurch gekennzeichnet, daß
ein Verbindungselement (6) zwischen zwei rohrartige Abgasanlagenelemente eingefügt wird,
wobei das Verbindungselement zwei sich konzentrisch umgebende und zueinander kugelig bewegliche Hülsen zur Aufnahme jeweils eines Abgasanlagenelements aufweist derartig, daß eine Winkelstellung der beiden Abgasanlagenelemente zueinander einstellbar ist,
die kugelig beweglichen Hülsen anschließend miteinander fixiert werden, so daß die Verbindung winkelsteif ist.

10. Verfahren nach Anspruch 9, dadurch gekennzeichnet, daß das Verbindungselement an einem Abgasanlagenelement (17) angebracht wird,
das Verbindungselement teilweise über das andere Abgasanlagenelement (16) geschoben wird,
in einer gewünschten Winkelstellung zunächst die Hülse mit einem inneren Kugelbereich durch Verspannen oder Einengen in radialer Richtung fixiert wird und anschließend die andere Hülse durch Verspannen oder Einengen in radialer Richtung fixiert wird.
